# EUROPEAN PATENT SPECIFICATION

(11) **EP 4 192 609 B1**
(45) Date of publication and mention of the grant of the patent: **02.10.2024**
(21) Application number: 21752071.7
(22) Date of filing: 02.08.2021
(51) Int. Cl.: B01F 23/213, B01F 25/32, B01F 25/433, B01F 25/452

(54) **METHOD IN A FLOW DEVICE FOR EXHAUST GAS AFTERTREATMENT AND THE FLOW DEVICE**
VERFAHREN IN EINER STRÖMUNGSVORRICHTUNG ZUR ABGASNACHBEHANDLUNG UND STRÖMUNGSVORRICHTUNG
PROCÉDÉ DANS UN DISPOSITIF D'ÉCOULEMENT POUR POST-TRAITEMENT DE GAZ D'ÉCHAPPEMENT ET DISPOSITIF D'ÉCOULEMENT

(30) Priority: 05.08.2020 FI 20205784
(43) Date of publication of application: 14.06.2023
(73) Proprietor: Proventia Oy, 90460 Oulunsalo (FI)
(72) Inventor: TYNI, Tuomas, 90460 Oulunsalo (FI)
(74) Representative: Espatent Oy
(86) International application number: PCT/FI2021/050543
(87) International publication number: WO 2022/029371

(56) References cited:
- EP-A2- 2 687 286

## Description

### TECHNICAL FIELD

The present disclosure generally relates to a method in a flow device for exhaust gas aftertreatment and to the flow device. The disclosure relates particularly, though not exclusively, to reducing pressure loss of reactant mixing with exhaust gas of diesel engines.

### BACKGROUND

This section illustrates useful background information without admission of any technique described herein representative of the state of the art.

EP2465602B1 discloses a method and device for exhaust gas cleaning in which a substance is fed into the exhaust gas flow flowing in the exhaust gas passage (10), which substance reacts with harmful compounds in the exhaust gas, whereby compounds are generated, which are less harmful for the environment. The reactive substance can be urea. The exhaust gas flow is divided into two parts using a flow guide so that a centre flow is brought about to flow along a centre of an exhaust gas passage while an edge flow circulates and advances around the centre flow. The reactive substance is fed into the centre flow. The flow guide has a first passage part and a second passage part. The first passage part is fitted to form a centre flow from the exhaust gas passing through it in the centre of the exhaust gas passage and the second passage part is fitted to form an edge flow surrounding the centre flow from the exhaust gas passing through it. The first passage part is an inner duct, and the second passage part has at least one blade for steering exhaust gas received on a side of the exhaust gas passage into a motion circulating the inner duct. There are also various other mixer arrangements in which exhaust gas is brought into a rotating movement in a mixer pipe and there mixed with reactant injected either to the direction of the flow or against the direction of the flow.

Exhaust gas after treatment has limited room both in terms of physical space allowed and in terms of counter pressure that may be formed. The more turbulence is formed, the better the reactant generally evaporates, but the higher the pressure drop is required. There may also be competing other needs for the energy of the exhaust gas, such as turbos. Increased counter pressure of exhaust gas may also adversely inhibit emptying of engine cylinders of exhaust gas.

### SUMMARY

An object of the invention is to allow reducing counter pressure of exhaust gas mixing with reactant with compact structures. Another object of the invention is to provide a new technical alternative to existing techniques and/or to address any of the known problems of the prior art.

The appended claims define the scope of protection. Any examples and technical descriptions of apparatuses, products and/or methods in the description and/or drawings not covered by the claims are presented not as embodiments of the invention but as background art or examples useful for understanding the invention.

According to a first example aspect there is provided, according to claim 1, a method in a flow device for exhaust gas aftertreatment, comprising:
supporting a mixer pipe at least partially within a mixer chamber, the mixer pipe having a first end and a second end;
inputting exhaust gas through an input port that is in communication with the mixer chamber at a location spaced apart from the first end so that exhaust gas flows in towards the mixer pipe;
dividing the input exhaust gas into a first inflow onto a first side of the mixer pipe and into a second inflow onto a second side of the mixer pipe;
directing the first inflow in a first rotational direction and in a first longitudinal direction of the mixer pipe towards the first end of the mixer pipe;
guiding by an entry guide the first inflow into the first end of the mixer pipe so that a mixing flow is formed into the mixer pipe for receiving a reactant feed; and
directing the second inflow in a second rotational direction and in a second longitudinal direction of the mixer pipe towards the second end of the mixer pipe for bypassing the first end of the mixer pipe.

The second rotational direction is opposite to the first rotational direction.

Advantageously, by directing the first and second inflows to opposite rotational directions of the mixer pipe and to opposite longitudinal directions of the mixer pipe on opposite sides of the mixer pipe, the mixer pipe may be used to guide the exhaust gas into opposite rotational directions about the mixer pipe.

The second longitudinal direction may be opposite to the first longitudinal direction. The method may control pressure of the exhaust gas aftertreatment by forming at least one bypass of turbulence structures that induce turbulence and so add pressure loss. The method may allow bypassing the first end of the mixer pipe by a portion of the input exhaust gas, such as at least 20 %; 33 %; 40 %; 50 %; 60 %; 67 %; or 80 %. The bypass may reduce mixing capacity in comparison to space required by the mixing of the exhaust gas for the aftertreatment. The dividing of the exhaust gas into the first inflow and the second inflow may be adapted to a required counter pressure formed by the mixer.

The method may comprise blocking a first passage between the mixer pipe and the mixer chamber on the first side of the mixer pipe so preventing first inflow flowing towards the second end of the mixer pipe. The method may comprise blocking a second passage between the mixer pipe and the mixer chamber on the second side of the mixer pipe so preventing second inflow flowing towards the first end of the mixer pipe. The blocking of the first passage and the blocking of the second passage may be performed jointly by a same divider. The divider may comprise one or more plates arranged into the mixer chamber between an outer surface of the mixer pipe and an inner surface of the mixer chamber. The divider may comprise a slope directing the first inflow to advance in the first longitudinal direction and directing the second inflow to advance in the second longitudinal direction.

In an alternative, the divider has a blocker transversely in relation to a longitudinal axis of the mixer pipe for one of the first and second inflows and the slope serving to axially steer both first and second inflows. In another alternative, the divider has two blockers transversely in relation to the longitudinal axis of the mixer pipe. In an embodiment, there is no slope between the blockers. In this case, some of the exhaust gas of the first and second inflows may be compressed against a dead end formed by the mixer pipe, the mixer chamber, and the blocker. The compressed gas may then also direct the exhaust gas of the first and second inflows to respective oppositely advancing and rotating movements. In comparison, the slope may reduce turbulence and counter pressure.

The divider may reside at a central region of the mixer pipe. The divider may have in a longitudinal direction a longitudinal centre. The longitudinal centre may be spaced apart of the first end. The longitudinal centre may be spaced apart of the first end by at least a third of an entire length of the mixer pipe. The longitudinal centre may be spaced apart of the second end. The longitudinal centre may be spaced apart of the second end by at least a third of an entire length of the mixer pipe.

The method may further comprise dividing the first inflow using the entry guide into a first mixing flow and a second mixing flow. The method may further comprise causing by the entry guide the first mixing flow to rotate and advance along an inner periphery of the mixer pipe. The method may further comprise causing by the entry guide the second mixing flow to advance within the first mixing flow. The method may further comprise inhibiting rotation of the second mixing flow.

The method may further comprise supporting the entry guide in place in relation to the first end of the mixer pipe.

The method may further comprise outputting the second inflow and the first inflow to join at a second end of the mixer pipe. The second end may reside in the mixing chamber.

In an embodiment, the method may further comprise outputting the second inflow to a joining pipe. The joining pipe may be co-axial with the mixer pipe. The mixer chamber may have a circular cross-section at outputting the second inflow to the joining pipe. The mixer chamber may be cylindrical. Alternatively, the mixer chamber may have a curved shape in longitudinal direction. The mixer chamber may have a barrel form. Alternatively, or additionally, the mixer chamber may have a waist section at which the mixer chamber has a smaller cross-section than around the waist section.

The mixer pipe may extend into the joining pipe. Alternatively, the mixer pipe may extend to an entry end of the joining pipe or there may be a longitudinal gap between the second end of the mixer pipe and the joining pipe.

The first inflow and the second inflow may be kept separate over the entire length of the mixer pipe. In an alternative, a portion of the first inflow may be allowed to mix with the second inflow and/or a portion of the second inflow may be allowed to mix with the first inflow. The mixer pipe may comprise one or more apertures for mixing at least some portion of the first inflow with at least some portion of the second inflow between the length of the mixer pipe. This mixing may be performed inside the mixer pipe. This mixing may be performed inside outside the mixer pipe.

The joining pipe may comprise one or more apertures for allowing some of the second inflow exit the joining pipe along a length of the joining pipe.

The joining pipe may have an end. The end of the joining pipe may be longitudinally aligned with the second end of the mixer pipe. Alternatively, the end of the joining pipe or the second end of the mixer pipe may extend farther than the other.

The output of the joining pipe and the mixer pipe may be received and reversed by a reverse cup to flow into a joint flow advancing into the first longitudinal direction. The method may further comprise housing the mixer in a mixer housing. The method may further comprise directing the joint flow by the mixer housing to a mixer output perpendicularly regarding the mixer pipe. The mixer output may reside on same side of the mixer pipe than the input port. Alternatively, the mixer output may reside opposite to the input port or at an angle of 90 degrees or 270 degrees regarding the input port.

The mixer chamber may have a generally cylindrical shape. The mixer chamber may have a rounded connection to the input port or to an inlet. The mixer chamber may coaxially surround the mixer pipe when discounting the rounded connection to the input port or to the inlet. The inlet may comprise the input port and an input pipe.

It is disclosed herein a method in a flow device for exhaust gas aftertreatment, comprising:
receiving exhaust gas to a mixer towards a mixer pipe;
dividing received exhaust gas into a first inflow and a second inflow;
guiding the first inflow to a combination of first longitudinal and rotational directions along the mixer pipe so that a first inflow runs to a first end of the mixer pipe for passing through the mixer pipe and mixing with a reactant in the mixer pipe;
guiding the second inflow to a combination of second longitudinal and rotational directions that are opposite to the first longitudinal and rotational directions so that the second inflow runs around the mixer pipe for bypassing the mixer pipe; and
combining at least most of the first and second inflows after the first inflow has passed through the mixer pipe.

According to claim 5 there is provided a flow device for exhaust gas aftertreatment, comprising:
a mixer pipe at least partially within a mixer chamber, the mixer pipe having a first end and a second end;
an input for inputting exhaust gas, in communication with the mixer chamber, and at a location spaced apart from the first end, allowing exhaust gas flow in towards the mixer pipe;
a divider arranged to divide the input exhaust gas into a first inflow onto a first side of the mixer pipe and into a second inflow onto a second side of the mixer pipe;
the divider being further arranged to direct the first inflow in a first rotational direction and in a first longitudinal direction of the mixer pipe towards the first end of the mixer pipe;
an entry guide arranged to guide the first inflow into the first end of the mixer pipe so that a mixing flow is formed into the mixer pipe for receiving a reactant feed; and
the divider being further arranged to direct the second inflow in a second rotational direction and in a second longitudinal direction of the mixer pipe towards the second end of the mixer pipe for bypassing the first end of the mixer pipe, wherein the second rotational direction is opposite to the first rotational direction.

The divider may comprise at least one slope configured to direct the first inflow and the second inflow in the respective first and second longitudinal directions of the mixer pipe. The at least one slope may longitudinally extend over the input. The at least one slope may longitudinally extend over most of a length of the mixer pipe. The at least one slope may longitudinally extend to the second end of the mixer pipe or to a proportion X of the length of the mixer pipe from the second end of the mixer pipe, wherein X is at most 0.2; 0.1; 0.05; or 0.02. If the mixer pipe has an uneven edge at any of the first end and the second end, the length of the mixer pipe may be computed as an average length computed across a periphery of the mixer pipe. The divider may be formed of a single sheet. The divider may comprise a first part forming two slopes and a dividing member joining ends of the slopes. The dividing member may be planar and reside along a longitudinal axis of the mixer pipe. The dividing member may reside radially in relation to the mixer pipe.

The divider may be attached to the mixing chamber by spot welding. The divider may loosely fit in the mixing chamber. The divider may be configured to close a portion of a radial spacing between the mixer pipe and the mixing chamber. The portion of the radial spacing may be at least 90 %; 95 %; 99 %; or 99,9 %. Advantageously, the divider may be configured to direct the exhaust gas along desired paths even without necessarily sealing sides of the divider based on inertia of the exhaust gas so that separate sealings may be avoided. The divider may form a spiral. The spiral may extend over an angle of at least 180 degrees; 270 degrees; 360 degrees; or 405 degrees.

The second end of the mixer pipe may longitudinally extend to at least 40 %; 50%, 60%, 70 %, or 80 % of the mixer chamber.

The second end of the mixer pipe may longitudinally extend to at most 50%, 60%, 70 %, 80 %; or 90 % of a length of the mixer chamber.

It is disclosed herein a flow device for exhaust gas aftertreatment, comprising:
an input for receiving exhaust gas to a mixer towards a mixer pipe;
a divider for dividing received exhaust gas into a first inflow and a second inflow;
a first guide for guiding the first inflow to a combination of first longitudinal and rotational directions along the mixer pipe so that a first inflow runs to a first end of the mixer pipe for passing through the mixer pipe and mixing with a reactant in the mixer pipe;
a second guide for guiding the second inflow to a combination of second longitudinal and rotational directions that are opposite to the first longitudinal and rotational directions so that the second inflow runs around the mixer pipe for bypassing the mixer pipe; and
a combiner for combining at least most of the first and second inflows after the first inflow has passed through the mixer pipe.

Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:
Fig. 1 shows a three-dimensional view of a mixer of an example embodiment for exhaust gas aftertreatment.
Fig. 2shows a flow chart of an exhaust gas aftertreatment mixing process of an example embodiment;
Fig. 3 shows a three-dimensional view of a portion of a mixer of an example embodiment;
Fig. 4 shows a three-dimensional view of a portion of a mixer of an example embodiment;
Fig. 5 shows a three-dimensional view, seen from input port side, of a portion of the mixer of Figs. 3 and 4;
Fig. 6 shows a three-dimensional view of some alternative mixer pipe end shapes;
Fig. 7 shows a three-dimensional view of one form of an entry guide for the mixer pipe;
Fig. 8 shows a three-dimensional view of an alternative entry guide;
Fig. 9 shows another alternative entry guide of an embodiment; and
Fig. 10 shows the entry guide Fig. 9 when attached to a first end of the mixer chamber.

### DETAILED DESCRIPTION

In the following description, like reference signs denote like elements or steps. Various parts of a larger system will be described with reference to particular drawings which necessarily combine particular forms of various parts of the larger system. It should be appreciated that these drawings serve for illustration only. Any structural parts, variants, and implementations of any part of the system can be freely applied with other structural parts, variants, and implementations of any part of the system, unless the skilled person would understand such a combination as not compatible by structure or operation.

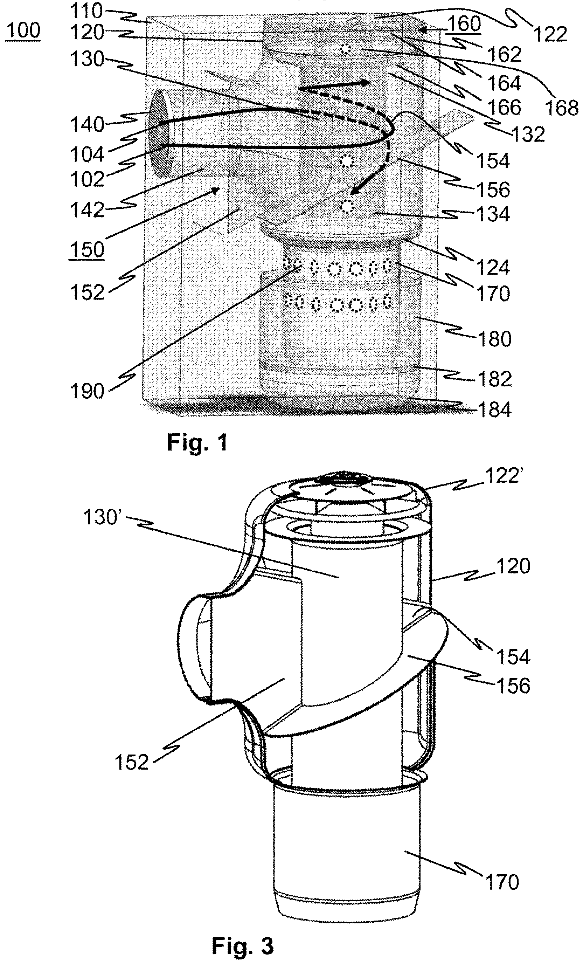

Fig. 1 shows a three-dimensional view of a flow device 100 for exhaust gas aftertreatment 100 of an example embodiment for exhaust gas aftertreatment. The flow device 100 comprises a mixer housing 110 that houses a mixer chamber 120 that at least partially contains a mixer pipe 130 and a divider 150.

The mixer pipe 130 has a first end 132 for receiving a first inflow and reactant (e.g., from a reactant injector, not shown). The mixer pipe 130 also has a second end 134 for output of at least some, typically all or most, of the first inflow and reactant. At the second end 134, at least a portion if not all of the reactant has been mixed in.

The flow device 100 comprises an input port 140 that is in communication with the mixer chamber 120 for receiving exhaust gas into the flow device 100 at a location spaced apart from the first end 132 so that exhaust gas flows in towards the mixer pipe 130.

The flow device 100 further comprises a divider 150 for dividing the input exhaust gas into a first inflow 102 onto a first side of the mixer pipe 130 and into a second inflow 104 onto a second side of the mixer pipe 130. The divider 150 also directs the first inflow 102 in a first rotational direction and in a first longitudinal direction of the mixer pipe 130 towards the first end 132 of the mixer pipe 134.

The flow device 100 further comprises an entry guide 160 for guiding the first inflow 102 into the first end 132 of the mixer pipe 130 so that a mixing flow is formed into the mixer pipe 130 for receiving a reactant feed.

The divider 150 further directs 260 the second inflow 104 in a second rotational direction and in a second longitudinal direction of the mixer pipe 130 towards the second end 132 of the mixer pipe 130 for bypassing the first end 102 of the mixer pipe 130. In Fig. 1, the second rotational direction is opposite to the first rotational direction and the second longitudinal direction is opposite to the first longitudinal direction.

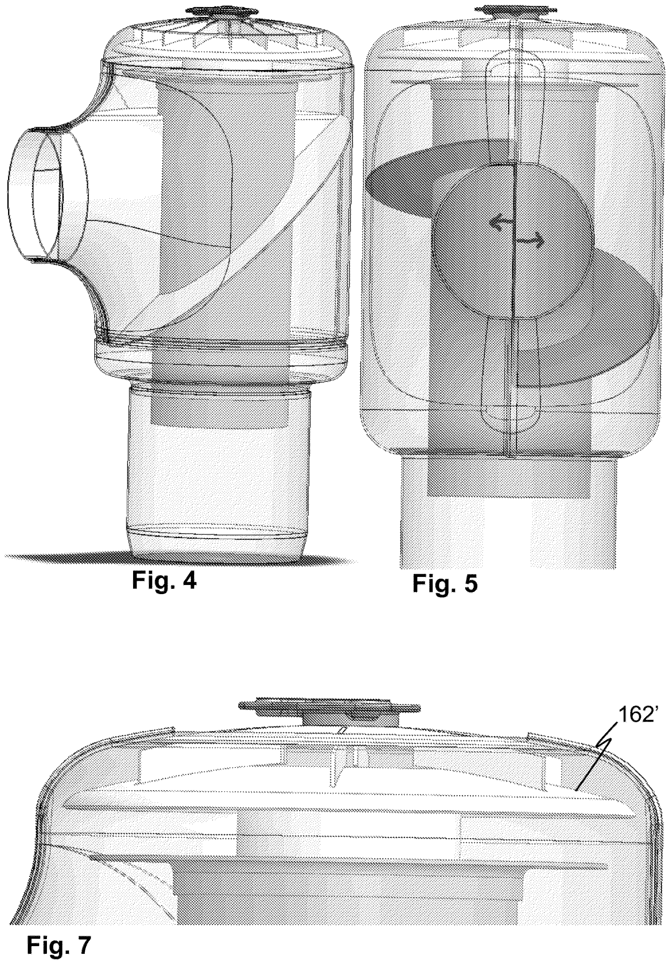

Fig. 1 further shows a connecting pipe 142 used in one variant in which the input port 140 is brought to or outside of the mixer housing 110. Fig. 1 further shows an upright member 152 such as a plate as well as a first slope 154 and a second slope 156 for jointly forming the divider 150. In Fig. 5, the slopes are cut for illustrational purpose along a straight cutting plane whereas preferably the first and second slopes 154, 156 do block respective sides of the mixer pipe 130 so that exhaust would not leak between an inner surface of the mixer chamber 120 and the slopes 154, 156. See Fig. 3 for a more realistic representation of the first and second slopes 154, 156.

The entry guide 160 of Fig. 1 is configured to divide the first inflow 104 into a first mixing flow and a second mixing flow. In an embodiment, the entry guide 160 causes the first mixing flow to continue its rotating flow and advance along an inner periphery of the mixer pipe. To this end, the entry guide 160 may comprise a first guide plate or ring 162 and/or a separator 168 (e.g., pipe, pipelet, or cone or other object formed of one or more pieces). The separator may extend into the mixer pipe 130 or end before the first end 132 of the mixer pipe 130.

A second guide plate or ring 166 may also be provided for controlling the first inflow at entry into the mixer pipe 130.

In an embodiment, the entry guide 160 causes the second mixing flow to advance within the first mixing flow. In an embodiment, the entry guide 160 further comprises a plurality of vanes 164, guide pipes or other structures for inhibiting rotation of the second mixing flow.

In Fig. 1, the second end 134 of the mixer pipe 130 resides within the mixer chamber 120. The mixer chamber 120 has a first end 122 which may also act as a portion of the entry guide 160, and a second end 124. The second end may have an opening for a joining pipe 170 that receives the first inflow and the second inflow. The joining pipe 170 of Fig. 1 then extends to reversing cup 180 that may have a support mesh or one or more support arms or some other support structure 182 for maintaining the reversing cup aligned preferably coaxially with the mixer pipe. The reversing cup 180 has a closed end 184 or the reversing cup 180 in conjunction with an inner side of the mixer housing 110 forms the closed end 184 so as to make the output of the joining pipe to turn to a reverse direction between the inner sides of the reversing cup and the joining pipe.

It is generally advantageous for reducing counter pressure or pressure drop across a mixer if various surfaces engaging with the flows are smooth. However, it is possible to provide several smaller or greater apertures for allowing various shortcuts or further joining paths for different flows. Fig. 1 illustrates several dashed apertures 190 any of which - or none - may be used depending on implementation.

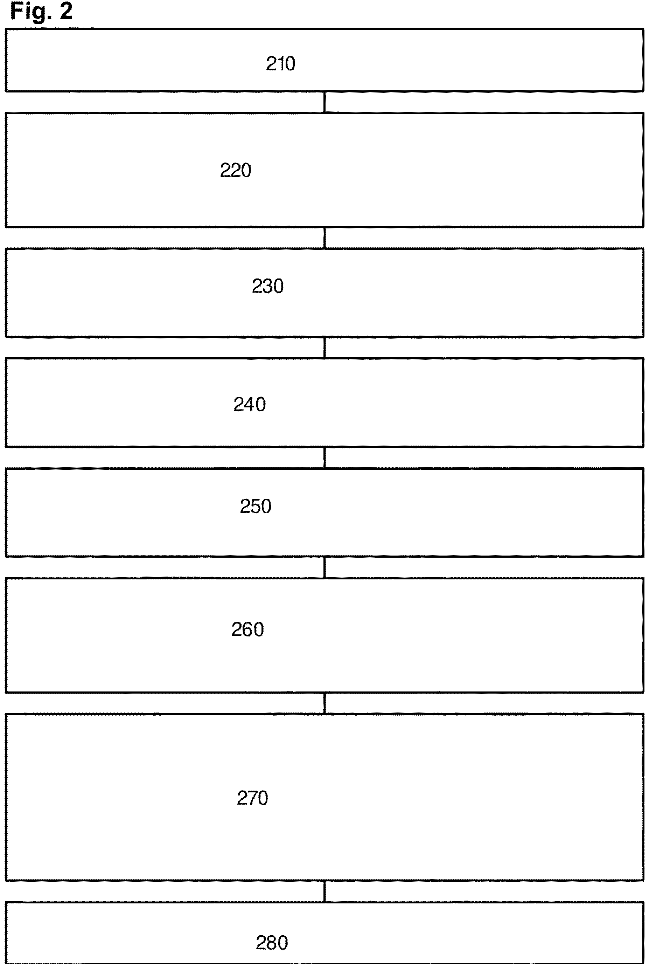

Fig. 2 shows a flow chart of an exhaust gas aftertreatment mixing process of an example embodiment, comprising:
supporting 210 the mixer pipe 130 at least partially within the mixer chamber 120, the mixer pipe 130 having the first end 132 and the second end 134;
inputting 220 exhaust gas through the input port 140 that is in communication with the mixer chamber 120 at a location spaced apart from the first end 132 so that exhaust gas flows in towards the mixer pipe 130;
dividing 230 the input exhaust gas into the first inflow 102 onto the first side of the mixer pipe 130 and into the second inflow 104 onto the second side of the mixer pipe 130;
directing 240 the first inflow 102 in the first rotational direction and in the first longitudinal direction of the mixer pipe 130 towards the first end 132 of the mixer pipe 134;
guiding 250 by the entry guide 160 the first inflow 102 into the first end 132 of the mixer pipe 130 so that the mixing flow is formed into the mixer pipe 130 for receiving a reactant feed; and
directing 260 the second inflow 104 in the second rotational direction and in the second longitudinal direction of the mixer pipe 130 towards the second end 132 of the mixer pipe 130 for bypassing the first end 102 of the mixer pipe 130.

The method may further comprise any of:
blocking 270 first and second passages between the mixer pipe and the mixer chamber on the first side of the mixer pipe so preventing first inflow flowing towards the second end of the mixer pipe and between the mixer pipe and the mixer chamber on the second side of the mixer pipe for preventing second inflow flowing towards the first end of the mixer pipe; and/or
performing 280 the blocking of the first passage and the blocking of the second passage jointly using a same divider.

Fig. 3 shows a three-dimensional view of a portion of a mixer of an example embodiment. Fig. 3 illustrates a rounded mixer housing end 122' and a mixer pipe 130' that extends out of the mixer chamber 120. Alternatively, or additionally, the mixer chamber 120 may be relatively longer than that of Fig. 3 so that the mixer pipe 130' does not exceed to outside of the mixer chamber 120 but instead the second end 134 of the mixer pipe 130 resides within the mixer chamber 120.

Fig. 4 shows a three-dimensional view of a portion of a mixer of an example embodiment. In this embodiment, there is only one slope that serves to direct both the first inflow and the second inflow while otherwise this embodiment corresponds to that of Fig. 3.

Fig. 5 shows a three-dimensional view, seen from input port side, of a portion of the mixer of Figs. 3 and 4, with added arrows indicating how the divider 150 could be adjusted for increasing or decreasing distribution of exhaust gas into the first inflow and to the second inflow. This view also helps to perceive that how smoothly the slopes guide the first and second inflow with little pressure loss induced for incurring the opposite rotating and advancing directions for these inflows.

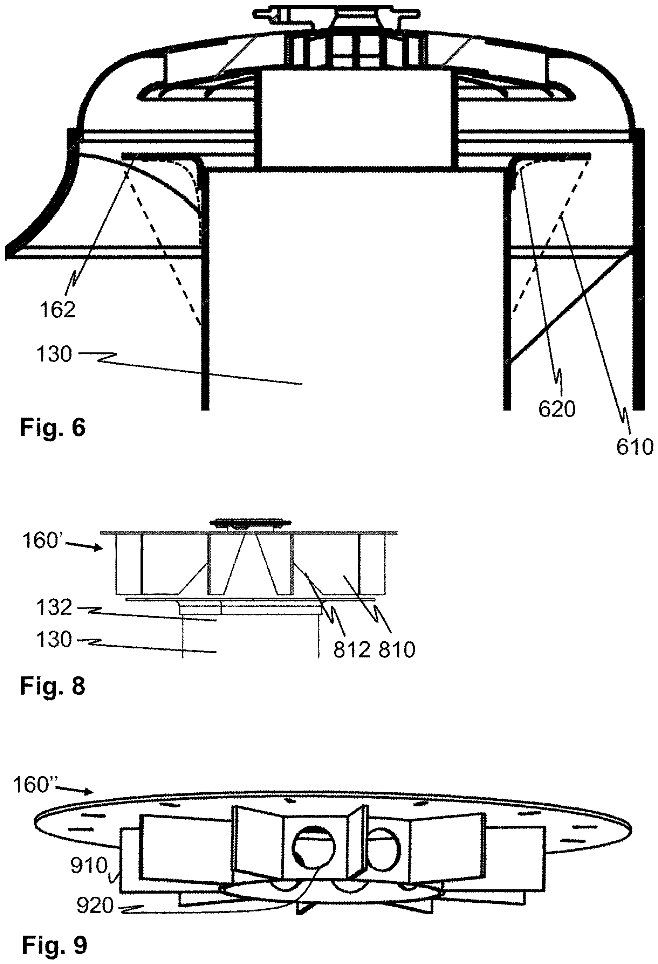

Fig. 6 shows a three-dimensional view of some alternative mixer pipe end shapes: the first end of the mixer pipe can be formed to have rounded end 610 for reducing sharp edges that may incur turbulence. Also, a slope shape 620 is illustrated in which a triangle forms between the straight continuation of the mixer pipe 130 and the first guide plate 162.

Fig. 7 shows a three-dimensional view of one form of an entry guide for the mixer pipe. In particular, this drawing clearly illustrates an arcuate (e.g., outwards convex, alternatively could be also concave) shaped variant 162' of the first guide plate or ring 162 of Fig. 1.

Fig. 8 shows a three-dimensional view of an alternative entry guide 160' that guides the entire first inflow 102 into the first end 132 of the mixer pipe 130 without significant rotating movement. The alternative entry guide 160' of Fig. 8 has a plurality of first radial guide members 810 which here have a sloping central ends 812 so as to inhibit central flow near an injector when provided while avoiding accrual of reactant onto the first radial guide members 810.

Fig. 9 shows another alternative entry guide 160" that may be used either with a centre flow aperture as in the embodiment of Fig. 6 or without a centre flow aperture to guide the entire first inflow into the first end 132 of the mixer pipe 130. The entry guide 160" of Fig. 9 comprises a plurality of second radial guide members 910 between which apertures 920 or openings (e.g., grooves) are formed to allow some of the first inflow to enter with inhibited rotation, e.g., as the second mixing inflow within the rotating first mixing inflow.

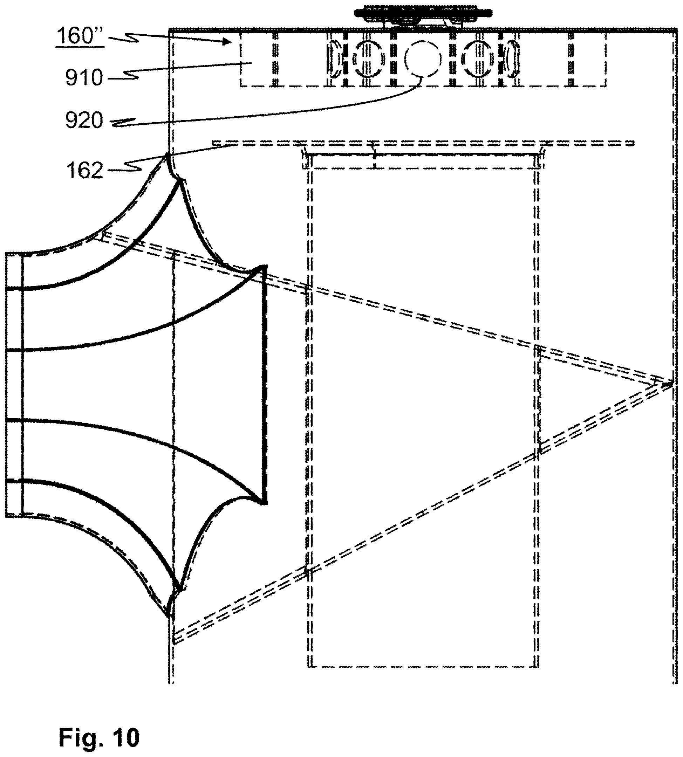

Fig. 10 shows the entry guide 160" of Fig. 9 when attached to a first end of the mixer chamber. The apertures 920 or openings in the entry guide 160" allow the second mixing inflow form a core for an exhaust gas feed of the mixing pipe 130 so that the rotation is inhibited or mostly removed by the second radial guide members 910. Between the entry guide 160" and the first guide plate or ring 162 there is a fairly open passage that allows most of the first inflow to proceed retaining the rotation as the first mixing inflow into the mixer pipe 130 with little counter pressure.

Various embodiments have been presented. It should be appreciated that in this document, words comprise, include, and contain are each used as open-ended expressions with no intended exclusivity.

The foregoing description has provided by way of non-limiting examples of particular implementations and embodiments a full and informative description of the best mode presently contemplated by the inventors for carrying out the invention. It is however clear to a person skilled in the art that the invention is not restricted to details of the embodiments presented in the foregoing, but that it can be implemented in other embodiments using equivalent means or in different combinations of embodiments without deviating from the characteristics of the invention. For example, various parts and elements described herein can be combined with one another. For example, two or more separately shown or described parts may be cast or otherwise integrally formed. On the other hand, singular parts may also be formed of two or more parts. For example, the flow guide may be assembled of two or more different parts such as sheet-made parts, and/or the mixer chamber 120 and/or mixer pipe 130 may be formed of two or more parts.

Various embodiments of this disclosure are usable for mixing reactants such as urea with NOx containing exhaust gases, for example. Advantageously, particularly compact structures may be achieved by space efficiently forming mixing and bypassing inflows which are conducting in adjacent channels and then combined making use of their joined rotation. For example, the space surrounding the mixer pipe at the mixer port region may be used all around the mixer pipe for conducting exhaust gas. Moreover, the opposite rotational directions of the first and second inflows may contribute into efficient further mixing of the first and second inflows. The pressure of a mixer may be controlled in exhaust gas after treatment by controlled bypassing the mixer pipe.

Furthermore, some of the features of the afore-disclosed example embodiments may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A method in a flow device (100) for exhaust gas aftertreatment, comprising:
supporting (210) a mixer pipe (130) at least partially within a mixer chamber (120), the mixer pipe (130) having a first end (132) and a second end (134);
inputting (220) exhaust gas through an input port (140) that is in communication with the mixer chamber (120) at a location spaced apart from the first end (132) so that exhaust gas flows in towards the mixer pipe (130);
dividing (230) the input exhaust gas into a first inflow (102) onto a first side of the mixer pipe (130) and into a second inflow (104) onto a second side of the mixer pipe (130);
directing (240) the first inflow (102) in a first rotational direction about the mixer pipe and in a first longitudinal direction of the mixer pipe (130) towards the first end (132) of the mixer pipe (130);
guiding (250) by an entry guide (160) the first inflow (102) into the first end (132) of the mixer pipe (130) so that a mixing flow is formed into the mixer pipe (130) for receiving a reactant feed; and
directing (260) the second inflow (104) in a second rotational direction about the mixer pipe and in a second longitudinal direction of the mixer pipe (130) towards the second end (134) of the mixer pipe (130) for bypassing the first end (132) of the mixer pipe (130);
wherein the second rotational direction is opposite to the first rotational direction.

2. The method of claim 1, further comprising blocking a first passage between the mixer pipe and the mixer chamber on the first side of the mixer pipe so preventing first inflow flowing towards the second end of the mixer pipe and blocking a second passage between the mixer pipe and the mixer chamber on the second side of the mixer pipe so preventing second inflow flowing towards the first end of the mixer pipe.

3. The method of claim 1 or 2, further comprising blocking of the first passage and the blocking of the second passage jointly by a same divider.

4. The method of any one of claims 1 to 3, further comprising:
dividing the first inflow using the entry guide into a first mixing flow and a second mixing flow; and
causing by the entry guide the first mixing flow to rotate and advance along an inner periphery of the mixer pipe.

5. A flow device (100) for exhaust gas aftertreatment, comprising:
a mixer pipe (130) at least partially within a mixer chamber (120), the mixer pipe (130) having a first end (132) and a second end (134);
an input port (140) for exhaust gas, in communication with the mixer chamber (120), and at a location spaced apart from the first end (132), allowing exhaust gas flow in towards the mixer pipe (130);
a divider (150) arranged to divide the input exhaust gas into a first inflow (102) onto a first side of the mixer pipe (130) and into a second inflow (104) onto a second side of the mixer pipe (130);
the divider (150) being further arranged to direct the first inflow (102) in a first rotational direction about the mixer pipe and in a first longitudinal direction of the mixer pipe (130) towards the first end (132) of the mixer pipe (134);
an entry guide (160) arranged to guide the first inflow (102) into the first end (132) of the mixer pipe (130) so that a mixing flow is formed into the mixer pipe (130) for receiving a reactant feed; and
the divider (150) being further arranged to direct the second inflow (104) in a second rotational direction about the mixer pipe and in a second longitudinal direction of the mixer pipe (130) towards the second end (132) of the mixer pipe (130) for bypassing the first end (102) of the mixer pipe (130);
wherein the second rotational direction is opposite to the first rotational direction.

6. The flow device of claim 5, further comprising a blockage blocking a passage between the mixer pipe and the mixer chamber on the first side of the mixer pipe so preventing first inflow flowing towards the second end of the mixer pipe and blocking a passage between the mixer pipe and the mixer chamber on the second side of the mixer pipe so preventing second inflow flowing towards the first end of the mixer pipe.

7. The flow device of claim 6, wherein the divider forms the blockage.

8. The flow device of claim 6 or 7, wherein the divider has in a longitudinal direction a longitudinal centre that is spaced apart of the first end (132) and of the second end (134) of the mixer pipe (130) by at least a third of an entire length of the mixer pipe (130).

9. The flow device of any one of claims 5 to 8, the entry guide being further arranged to cause:
dividing the first inflow into a first mixing flow and a second mixing flow; and
that the first mixing flow rotates and advances along an inner periphery of the mixer pipe.

10. The flow device of any one of claims 5 to 9, wherein the second end (134) of the mixer pipe longitudinally extends to at most 50 % of a length of the mixer chamber.

11. The flow device of any one of claims 5 to 10, wherein the first inflow and the second inflow are configured to join in the mixer chamber.

12. The flow device of any one of claims 5 to 11, further comprising a joining pipe configured to receive the first inflow and the second inflow and to direct exhaust gas of the first inflow and the second inflow to a reverse cup for reversal and further mixing.

13. The flow device of any one of claims 5 to 12, further comprising a mixer output directed perpendicularly regarding the mixer pipe.

14. The flow device of any one of claims 5 to 13, wherein the mixer chamber has a generally cylindrical shape.

## Patentansprüche

1. Verfahren in einer Strömungsvorrichtung (100) zur Abgasnachbehandlung, umfassend:
Stützen (210) eines Mischrohrs (130) zumindest teilweise in einer Mischkammer (120), wobei das Mischrohr (130) ein erstes Ende (132) und ein zweites Ende (134) aufweist;
Einspeisen (220) von Abgas durch eine Einspeisungsöffnung (140), die mit der Mischkammer (120) in Verbindung steht, an einer Stelle, die von dem ersten Ende (132) beabstandet ist, sodass Abgas zu dem Mischrohr (130) strömt;
Unterteilen (230) des eingespeisten Abgases in einen ersten Zustrom (102) an einer ersten Seite des Mischrohrs (130) und in einen zweiten Zustrom (104) an einer zweiten Seite des Mischrohrs (130);
Lenken (240) des ersten Zustroms (102) in einer ersten Drehrichtung um das Mischrohr und in einer ersten Längsrichtung des Mischrohrs (130) zu dem ersten Ende (132) des Mischrohrs (130);
Führen (250) des ersten Zustroms (102) durch eine Eintrittsführung (160) in das erste Ende (132) des Mischrohrs (130), sodass ein Mischstrom in das Mischrohr (130) zum Aufnehmen einer Reaktionsmittelzufuhr gebildet wird; und
Lenken (260) des zweiten Zustroms (104) in einer zweiten Drehrichtung um das Mischrohr und in einer zweiten Längsrichtung des Mischrohrs (130) zu dem zweiten Ende (134) des Mischrohrs (130), um das erste Ende (132) des Mischrohrs (130) zu umgehen;
wobei die zweite Drehrichtung der ersten Drehrichtung entgegengesetzt ist.

2. Verfahren nach Anspruch 1, weiter umfassend Blockieren eines ersten Durchlasses zwischen dem Mischrohr und der Mischkammer an der ersten Seite des Mischrohrs um zu verhindern, dass der erste Zustrom zu dem zweiten Ende des Mischrohrs strömt, und Blockieren eines zweiten Durchlasses zwischen dem Mischrohr und der Mischkammer an der zweiten Seite des Mischrohrs um zu verhindern, dass der zweite Zustrom zu dem ersten Ende des Mischrohrs strömt.

3. Verfahren nach Anspruch 1 oder 2, weiter umfassend Blockieren des ersten Durchlasses und das Blockieren des zweiten Durchlasses gemeinsam durch eine selbe Unterteilung.

4. Verfahren nach einem der Ansprüche 1 bis 3, weiter umfassend:
Unterteilen des ersten Zustroms unter Verwendung der Eintrittsführung in einen ersten Mischstrom und einen zweiten Mischstrom; und
Veranlassen, durch die Eintrittsführung, dass der erste Mischstrom dreht und sich entlang eines Innenumfangs des Mischrohrs fortbewegt.

5. Strömungsvorrichtung (100) zur Abgasnachbehandlung, umfassend:
ein Mischrohr (130) zumindest teilweise in einer Mischkammer (120), wobei das Mischrohr (130) ein erstes Ende (132) und ein zweites Ende (134) aufweist;
eine Einspeisungsöffnung (140) für Abgas, die mit der Mischkammer (120) in Verbindung steht und sich an einer Stelle befindet, die von dem ersten Ende (132) beabstandet ist, sodass Abgas zu dem Mischrohr (130) strömen kann;
eine Unterteilung (150), die angeordnet ist, um das eingespeiste Abgas in einen ersten Zustrom (102) an einer ersten Seite des Mischrohrs (130) und in einen zweiten Zustrom (104) an einer zweiten Seite des Mischrohrs (130) zu teilen;
wobei die Unterteilung (150) weiter angeordnet ist, um den ersten Zustrom (102) in einer ersten Drehrichtung um das Mischrohr und in einer ersten Längsrichtung des Mischrohrs (130) zu dem ersten Ende (132) des Mischrohrs (134) zu lenken;
eine Eintrittsführung (160), die angeordnet ist, den ersten Zustrom (102) in das erste Ende (132) des Mischrohrs (130) zu lenken, sodass ein Mischstrom in das Mischrohr (130) zum Aufnehmen einer Reaktionsmittelzufuhr gebildet wird; und
wobei die Unterteilung (150) weiter angeordnet ist, den zweiten Zustrom (104) in einer zweiten Drehrichtung um das Mischrohr und in einer zweiten Längsrichtung des Mischrohrs (130) zu dem zweiten Ende (132) des Mischrohrs (130) zu lenken, um das erste Ende (102) des Mischrohrs (130) zu umgehen;
wobei die zweite Drehrichtung der ersten Drehrichtung entgegengesetzt ist.

6. Strömungsvorrichtung nach Anspruch 5, weiter umfassend eine Blockade zum Blockieren eines ersten Durchlasses zwischen dem Mischrohr und der Mischkammer an der ersten Seite des Mischrohrs um zu verhindern, dass der erste Zustrom zu dem zweiten Ende des Mischrohrs strömt, und Blockieren eines zweiten Durchlasses zwischen dem Mischrohr und der Mischkammer an der zweiten Seite des Mischrohrs um zu verhindern, dass der zweite Zustrom zu dem ersten Ende des Mischrohrs strömt.

7. Strömungsvorrichtung nach Anspruch 6, wobei die Unterteilung die Blockade bildet.

8. Strömungsvorrichtung nach Anspruch 6 oder 7, wobei die Unterteilung in einer Längsrichtung einen Längsmittelpunkt aufweist, der von dem ersten Ende (132) und dem zweiten Ende (134) des Mischrohrs (130) um zumindest ein Drittel der Gesamtlänge des Mischrohrs (130) beabstandet ist.

9. Strömungsvorrichtung nach einem der Ansprüche 5 bis 8, wobei die Eintrittsführung weiter angeordnet ist, um Folgendes zu veranlassen:
Unterteilen des ersten Zustroms in einen ersten Mischstrom und einen zweiten Mischstrom; und
dass der erste Mischstrom dreht und sich entlang eines Innenumfangs des Mischrohrs fortbewegt.

10. Strömungsvorrichtung nach einem der Ansprüche 5 bis 9, wobei sich das zweite Ende (134) des Mischrohrs in Längsrichtung bis höchstens 50% einer Länge der Mischkammer erstreckt.

11. Strömungsvorrichtung nach einem der Ansprüche 5 bis 10, wobei der erste Zustrom und der zweite Zustrom eingerichtet sind, in der Mischkammer vereint zu werden.

12. Strömungsvorrichtung nach einem der Ansprüche 5 bis 11, weiter umfassend ein Verbindungsrohr, das eingerichtet ist, den ersten Zustrom und den zweiten Zustrom aufzunehmen und Abgas des ersten Zustroms und des zweiten Zustroms zu einem Umkehrbecher zum Umkehren und weiteren Mischen zu lenken.

13. Strömungsvorrichtung nach einem der Ansprüche 5 bis 12, weiter umfassend einen Mischerausgang, der senkrecht in Bezug auf das Mischrohr gelenkt wird.

14. Strömungsvorrichtung nach einem der Ansprüche 5 bis 13, wobei die Mischkammer eine im Allgemeinen zylindrische Form aufweist.

## Revendications

1. Un procédé dans un dispositif d'écoulement (100) pour le post-traitement de gaz d'échappement, comprenant :
le fait (210) de supporter un tuyau mélangeur (130) au moins partiellement à l'intérieur d'une chambre de mélange (120), le tuyau mélangeur (130) ayant une première extrémité (132) et une deuxième extrémité (134) ;
le fait (220) d'introduire des gaz d'échappement par un orifice d'entrée (140) qui est en communication avec la chambre de mélange (120) à un endroit espacé de la première extrémité (132) de manière à ce que les gaz d'échappement s'écoulent vers le tuyau mélangeur (130) ;
le fait (230) de diviser les gaz d'échappement d'entrée en un premier flux entrant (102) sur un premier côté du tuyau mélangeur (130) et en un deuxième flux entrant (104) sur un deuxième côté du tuyau mélangeur (130) ;
le fait (240) de diriger le premier flux entrant (102) dans un premier sens de rotation autour du tuyau mélangeur et dans une première direction longitudinale du tuyau mélangeur (130) vers la première extrémité (132) du tuyau mélangeur (130) ;
le fait de guider (250) par un guide d'entrée (160) le premier flux entrant (102) dans la première extrémité (132) du tuyau mélangeur (130) de sorte qu'un flux de mélange soit formé dans le tuyau mélangeur (130) pour recevoir une alimentation en réactifs ; et
le fait (260) de diriger le deuxième flux entrant (104) dans un deuxième sens de rotation autour du tuyau mélangeur et dans une deuxième direction longitudinale du tuyau mélangeur (130) vers la deuxième extrémité (134) du tuyau mélangeur (130) pour contourner la première extrémité (132) du tuyau mélangeur (130) ;
le deuxième sens de rotation est opposé au premier sens de rotation.

2. Le procédé selon la revendication 1, comprenant en outre le fait de bloquer un premier passage entre le tuyau mélangeur et la chambre de mélange du premier côté du tuyau mélangeur empêchant ainsi le premier flux entrant de s'écouler vers la deuxième extrémité du tuyau mélangeur et le fait de bloquer un deuxième passage entre le tuyau mélangeur et la chambre de mélangeur sur le deuxième côté du tuyau mélangeur, empêchant ainsi le deuxième flux entrant de s'écouler vers la première extrémité du tuyau mélangeur.

3. Le procédé selon la revendication 1 ou la revendication 2, comprenant en outre le fait de bloquer le premier passage et de bloquer le deuxième passage conjointement par un même diviseur.

4. Le procédé selon l'une quelconque des revendications 1 à 3, comprenant en outre :
le fait de diviser le premier flux entrant en utilisant le guide d'entrée en un premier flux entrant de mélange et un deuxième flux entrant de mélange ; et
le fait, par le guide d'entrée, d'amener le premier flux entrant de mélange à tourner et à avancer le long d'une périphérie interne du tuyau mélangeur.

5. Un dispositif d'écoulement (100) pour le post-traitement de gaz d'échappement, comprenant :
un tuyau mélangeur (130) au moins partiellement à l'intérieur d'une chambre de mélangeur (120), le tuyau mélangeur (130) ayant une première extrémité (132) et une deuxième extrémité (134) ;
un orifice d'entrée (140) pour les gaz d'échappement, en communication avec la chambre de mélangeur (120), et en un emplacement espacé de la première extrémité (132), permettant aux gaz d'échappement de s'écouler vers le tuyau mélangeur (130) ;
un diviseur (150) agencé pour diviser les gaz d'échappement d'entrée en un premier flux entrant (102) sur un premier côté du tuyau mélangeur (130) et en un deuxième flux entrant (104) sur un deuxième côté du tuyau mélangeur (130) ;
le diviseur (150) étant en outre agencé de façon à diriger le premier flux entrant (102) dans une première direction de rotation autour du tuyau mélangeur et dans une première direction longitudinale du tuyau mélangeur (130) vers la première extrémité (132) du tuyau mélangeur (134) ;
un guide d'entrée (160) agencé de façon à guider le premier flux entrant (102) dans la première extrémité (132) du tuyau mélangeur (130) de sorte qu'un flux de mélange soit formé dans le tuyau mélangeur (130) pour recevoir une alimentation en réactif ; et
le diviseur (150) étant en outre agencé de façon à diriger le deuxième flux entrant (104) dans une deuxième direction de rotation autour du tuyau mélangeur et dans une deuxième direction longitudinale du tuyau mélangeur (130) vers la deuxième extrémité (132) du tuyau mélangeur (130) pour contourner la première extrémité (102) du tuyau mélangeur (130) ;
le deuxième sens de rotation est opposé au premier sens de rotation.

6. Le dispositif d'écoulement selon la revendication 5, comprenant en outre un élément de blocage bloquant un passage entre le tuyau mélangeur et la chambre de mélange sur le premier côté du tuyau mélangeur, empêchant ainsi le premier flux entrant de s'écouler vers la deuxième extrémité du tuyau mélangeur et bloquant un passage entre le tuyau mélangeur et la chambre de mélangeur sur le deuxième côté du tuyau mélangeur, empêchant ainsi le deuxième flux entrant de s'écouler vers la première extrémité du tuyau mélangeur.

7. Le dispositif d'écoulement selon la revendication 6, dans lequel le diviseur forme l'élément de blocage.

8. Le dispositif d'écoulement selon la revendication 6 ou la revendication 7, dans lequel le diviseur présente dans une direction longitudinale un centre longitudinal qui est espacé de la première extrémité (132) et de la deuxième extrémité (134) du tuyau mélangeur (130) d'au moins un tiers de la longueur totale du tuyau mélangeur (130).

9. Le dispositif d'écoulement selon l'une quelconque des revendications 5 à 8, le guide d'entrée étant en outre agencé pour provoquer :
le fait de diviser le premier flux entrant en un premier flux entrant de mélange et un deuxième flux entrant de mélange ; et
le fait que le premier flux entrant de mélange tourne et avance le long d'une périphérie interne du tuyau mélangeur.

10. Le dispositif d'écoulement selon l'une quelconque des revendications 5 à 9, dans lequel la deuxième extrémité (134) du tuyau mélangeur s'étend longitudinalement sur au plus 50 % d'une longueur de la chambre du mélangeur.

11. Le dispositif d'écoulement selon l'une quelconque des revendications 5 à 10, dans lequel le premier flux entrant et le deuxième flux entrant sont configurés pour se rejoindre dans la chambre de mélange.

12. Le dispositif d'écoulement selon l'une quelconque des revendications 5 à 11, comprenant en outre un tuyau de jonction configuré pour recevoir le premier flux entrant et le deuxième flux entrant et pour diriger les gaz d'échappement du premier flux entrant et du deuxième flux entrant vers une coupelle inversée pour une inversion et un mélange supplémentaire.

13. Le dispositif d'écoulement selon l'une quelconque des revendications 5 à 12, comprenant en outre une sortie de mélangeur dirigée perpendiculairement au tuyau mélangeur.

14. Le dispositif d'écoulement selon l'une quelconque des revendications 5 à 13, dans lequel la chambre de mélange a une forme généralement cylindrique.
